# EUROPÄISCHE PATENTSCHRIFT

(11) **EP 4 449 281 B1**
(45) Veröffentlichungstag und Bekanntmachung des Hinweises auf die Patenterteilung: **09.12.2026**
(21) Anmeldenummer: 22800080.8
(22) Anmeldetag: 24.10.2022
(51) Int. Cl.: G06F 21/12

(54) **VERFAHREN UND PROZESSORSCHALTUNG ZUM ABSICHERN EINES CODES GEGEN MANIPULATIONEN EINER ANWENDUNGSSOFTWARE, SOWIE KRAFTFAHRZEUG-STEUERGERÄT UND KRAFTFAHRZEUG MIT EINEM SOLCHEN STEUERGERÄT**
METHOD AND PROCESSOR CIRCUIT FOR SECURING A CODE AGAINST MANIPULATION BY APPLICATION SOFTWARE, MOTOR VEHICLE CONTROL UNIT, AND MOTOR VEHICLE HAVING A CONTROL UNIT OF THIS TYPE
PROCÉDÉ ET CIRCUIT DE PROCESSEUR POUR SÉCURISER UN CODE CONTRE UNE MANIPULATION PAR UN LOGICIEL D'APPLICATION, UNITÉ DE COMMANDE DE VÉHICULE À MOTEUR ET VÉHICULE À MOTEUR DOTÉ D'UNE UNITÉ DE COMMANDE DE CE TYPE

(30) Priorität: 13.12.2021 DE 102021214183
(43) Veröffentlichungstag der Anmeldung: 23.10.2024
(73) Patentinhaber: AUMOVIO Germany GmbH, 60488 Frankfurt am Main (DE)
(72) Erfinder: SCHULTER, Wolfgang, 85057 Ingolstadt (DE); MATTMÜLLER, Karsten, 30175 Hannover (DE); WILHELM, Andreas, 30175 Hannover (DE)
(74) Vertreter: Aumovio Corporation
(86) Internationale Anmeldenummer: PCT/DE2022/200242
(87) Internationale Veröffentlichungsnummer: WO 2023/110025

(56) Entgegenhaltungen:
- WO-A1-2017/196777
- WO-A2-02/01333
- US-A1- 2007 028 115
- US-A1- 2021 286 871
- BRYAN PARNO ET AL: "Bootstrapping Trust in Commodity Computers", SECURITY AND PRIVACY (SP), 2010 IEEE SYMPOSIUM ON, IEEE, PISCATAWAY, NJ, USA, 16 May 2010 (2010-05-16), pages 414 - 429, XP031705098, ISBN: 978-1-4244-6894-2

## Beschreibung

Die Erfindung betrifft ein Verfahren und eine Prozessorschaltung zum Absichern eines Codes gegen Manipulationen einer Anwendungssoftware bei Ausführung in einer Prozessorschaltung. Wenn der Code nach einer Manipulation in der Prozessorschaltung gestartet wird, wird eine Selbstblockade der Prozessorschaltung ausgelöst, um eine Ausführung eines Schadcodes zu verhindern. Die Erfindung umfasst auch ein Kraftfahrzeug-Steuergerät, welches eine entsprechend eingerichtete Prozessorschaltung aufweist, sowie Kraftfahrzeug mit zumindest einem solchen Steuergerät.

Um die Integrität oder Authentizität eines Programmcodes zu überprüfen, können kryptographische Hashverfahren eingesetzt werden, und der resultierende Ist-Hashwert mit einem erwarteten Referenzhashwert verglichen werden. Bei Übereinstimmung lässt man die Ausführung des Programmcodes zu, im anderen Fall nicht, da man von nicht-authentischem Code ausgehen muss, was durch einen Angriff erfolgt sein kann. Diese Überprüfung findet typischerweise durch einen besonders gesicherten Bootloader statt, die Speicherung des erwarteten Hashwertes erfolgt in einem besonders gesicherten Teil der Hardware, einem Hardware Security Module, HSM, das Verfahren ist als "Secure-Boot" bekannt. Zum diesbezüglichen Stand der Technik gehören die Dokumente US 2021/286871, WO 2017/196777, US 2007/028115 und WO 02/01333.

Für ein Steuergerät eines Kraftfahrzeugs kann beim Starten oder Aktivieren ein solches Secure Boot Verfahren vorgesehen sein, das die Authentisierung von auszuführendem Code in einer Applikations-CPU durch ein Hardware Security Module (HSM) vorsieht, bevor dieser Code ausgeführt wird (Prinzip *"verify before execute*").

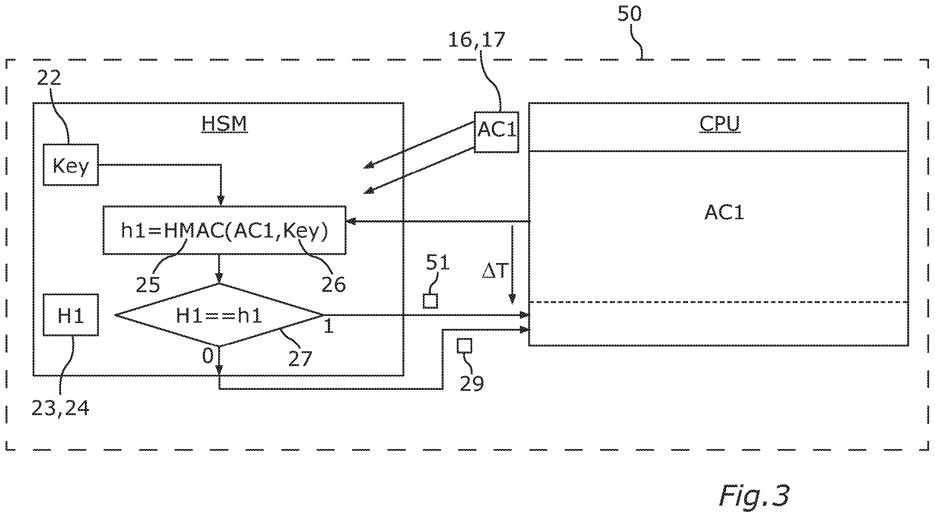

Fig. 3 veranschaulicht dieses Secure Boot Verfahren. Die Authentizität wird dabei mit Hilfe des kryptographischen Hashverfahrens (mit oder ohne kryptographischem Schlüssel / Key) in der Weise sichergestellt, dass der zur Ausführung anstehende Programmcode der Anwendungssoftware (Anwendungscode - Application Code, AC1) als Eingang für ein solches Hashverfahren dient. Beispiele für verfügbare Hashverfahren sind AES-CMAC und SHA-HMAC.

Nachdem das Ergebnis h1 vorliegt, wird dieses mit dem erwarteten Ergebnis H1, welches im HSM gesichert vorliegt, verglichen. Bei Übereinstimmung gilt der Anwendungscode AC1 als authentisch und wird vom HSM zur Ausführung freigegeben. Der Vergleich des tatsächlich vorliegenden Hashwertes h1 mit dem manipulationssicher im HSM gespeicherten erwarteten Wert H1 liefert somit eine Aussage, ob der zugrundeliegende Code authentisch und integer ist (1), oder nicht (0), für beide Ergebnisse wird die Laufzeit ΔT benötigt, was einer Verzögerung des Starts des Codes in der CPU bedeutet.

Das Hardware Security Module, HSM, ist vor Manipulationen besonders geschützt. So wird dessen boot code aus einem nur einmal beschreibbaren Speicher ausgeführt (= Bootloader), bevor jedweder Code der Applikationssoftware ausgeführt werden kann. Erst wenn der applikationsseitige Anwendungscode AC1 (hier auch in Kurzform als "Code" bezeichnet) auf Authentizität und Integrität überprüft wurde (*verify*), wird ist dieser zur Ausführung freigegeben (*enable*).

Typischerweise gibt es in einem Code mehrere Applikations-Codeblöcke (AC1, AC2, ...) mit jeweils unterschiedlichen Anforderungen an deren zeitliche Verfügbarkeit, so dass die ersten verifizierten Codeblöcke meist die mit den kürzesten Zeitanforderungen für das Aktivieren oder Starten sind. Grundsätzlich entsteht somit eine Wartesituation für verschiedene Applikations-Codeblöcke, was im Hinblick auf die Forderung nach Einhaltung maximaler Startzeiten kritisch ist.

Eine Startzeit kann zum Beispiel dann kritisch sein, wenn es sich bei dem Steuergerät um eine Steuerung handelt, die mittels Taste durch einen Benutzer aktiviert wird. Betätigt der Benutzer die Taste, so erwartet er in der Regel, dass innerhalb von 50 Millisekunden eine Reaktion des Steuergeräts eintritt. Ein Beispiel für solche Steuergeräte sind jeweils: ein Fensterheber, ein Schiebedach, eine Sitzverstellung. Um im deaktivierten Zustand Energie zu sparen, kann das Steuergerät beispielsweise stromlos geschaltet sein. Wird dann die Taste betätigt, muss in dem Steuergerät dessen Prozessorschaltung, beispielsweise ein Mikrocontroller, starten oder booten und dann innerhalb der maximalen Startzeit, also beispielsweise innerhalb von 50 Millisekunden, den Anwendungscode, beispielsweise das Ansteuern des Motors für den Fensterheber, ausführen. Durch die zusätzliche Verifizierung ("verify before execute") verzögert sich der Start oder das Booten um die besagte Zeitdauer ΔT. Hierdurch bleibt weniger Zeit für die eigentliche Startfunktion oder Bootfunktion des Anwendungscodes selbst.

Der Erfindung liegt die Aufgabe zugrunde, eine reaktionsschnelle Prozessorschaltung bereitzustellen, die dennoch eine Überprüfung des Programmcodes oder Applikationscodes einer Anwendungssoftware ermöglicht.

Die Aufgabe wird durch die Gegenstände der unabhängigen Patentansprüche gelöst. Vorteilhafte Weiterentwicklungen oder Weiterbildungen der Erfindung sind durch die abhängigen Patentansprüche, die folgende Beschreibung sowie die Figuren beschrieben.

Als eine Lösung umfasst die Erfindung ein Verfahren zum Absichern einer Prozessorschaltung gegen eine Ausführung eines manipulierten Codes einer Anwendungssoftware. Der hier genannte "Code" kann insbesondere der Binärcode oder Maschinencode sein, der durch eine CPU (central processing unit) der Prozessorschaltung, z.B. eines Mikroprozessors oder eines Mikrocontrollers, auszuführen ist, um die Anwendungsfunktion der Anwendungssoftware bereitzustellen, also beispielsweise das Steuern eines Fensterhebers oder eines Schiebedaches oder eines Sitzmotors. Hier könnte ein Benutzer (Angreifer) der Prozessorschaltung daran interessiert sein, den Code zu manipulieren, um die Anwendungsfunktion zu verändern. Die hier beschriebe Lösung soll vor allem einen Schutz dafür bieten, dass der Code bei deaktivierter Prozessorschaltung manipuliert wird, indem beispielsweise ein Flash-Speicher, in welchem der Code nicht-flüchtig gespeichert ist, verändert wird. Wird dann die Prozessorschaltung in Betrieb gesetzt oder aktiviert, würde ein Programmzähler der Prozessorschaltung entsprechend die Steuerbefehle oder Maschinenbefehle des manipulierten Codes einlesen und so das Ausführen des Codes beginnen.

Um die Prozessorschaltung im Falle einer Manipulation des Codes selbstblockierend auszugestalten, umfasst die Erfindung, dass in dem Code ein sogenanntes Nonce bereitgestellt wird, welches in Kombination mit dem übrigen, unmanipulierten Code bei Anwenden einer Hashfunktion auf den Code einen Hashwert ergibt, der ein vorbestimmtes Soll-Muster aufweist. Ein "Nonce" stellt hier eine Bitfolge oder Bytefolge dar, die zusätzlich zum eigentlichen Anwendungsfunktionalität in den Code eingefügt ist, damit hierdurch Einfluss auf das Resultat oder den Hashwert der Hashfunktion genommen wird, ohne dass hierzu der übrige Code, der die eigentliche Anwendungsfunktionalität bereitstellt, verändert werden müsste. Es handelt sich also um ein Datum, das für die eigentliche Anwendungssoftware selbst nicht verwendet wird. Durch Verändern des Werts des Nonce kann aber der durch die Hashfunktion gebildete Hashwert verändert oder eingestellt werden, ohne dass der übrige Code verändert werden muss, also derjenige Teil des Codes, der die Anwendungsfunktion bildet oder erzeugt. Der Begriff "Nonce" ist aus dem Bereich der Kryptowährungen bekannt, wo zu einem Datenblock ein solches Nonce hinzugefügt wird, um einen Hashwert des Datenblocks dahingehend zu manipulieren, dass er ein vollbestimmtes Soll-Muster, beispielsweise eine vorgegebene Anzahl an führenden Nullen im Hashwert, ergibt. Im Zusammenhang mit dem hier beschriebenen Hashwert ist der Begriff "Muster" des Hashwerts dahingehend zu verstehen, dass es sich auf nur einen Teil des Hashwerts bezieht (z.B. 32 von insgesamt 256 Bits des Hashwerts) und für diesen Teil eine Vorgabe in Bezug auf die Bitfolge oder den Zahlenwert dieses Teils bezieht. Wird also beispielsweise ein Soll-Muster vorgegeben, so kann der ursprüngliche unmanipulierte Code verwendet werden und in diesen noch das Nonce eingefügt werden und dann die Hashfunktion über dieser Kombination ausgeführt werden. Ergibt der Hashwert nicht das Soll-Muster, so kann nach dem Prinzip Trial-and-Error der Nonce so oft wiederholt verändert werden, bis die Kombination aus dem übrigen, unmanipulierten Code und dem Nonce den Hashwert mit dem vorgegebenen Soll-Muster ergibt. Der übrige Teil des Hashwerts kann dabei beliebig ausfallen.

Zum Starten der Ausführung des Codes ist vorgesehen, dass eine codeinterne oder codeexterne Startfunktion auf den Code mit dem darin integrierten Nonce die Hashfunktion anwendet, um so den aktuellen Hashwert des zu prüfenden Codes zu berechnen, wobei der aktuelle Hashwert ein Ist-Muster ergibt. Die Ausführung des Codes wird dann in Abhängigkeit von dem Ist-Muster gesteuert. Mit dem Begriff "codeintern" ist hierbei gemeint, dass die Anwendungssoftware selbst die Startfunktion umfasst, also die Anwendungssoftware einen Code aufweist, der zunächst sich selbst in Bezug auf den Hashwert überprüft. Dagegen ist eine "codeexterne" Startfunktion eine Startfunktion, die in der Prozessorschaltung zunächst ausgeführt wird und welche darüber entscheidet, ob oder an welcher Startadresse der eigentliche Code der Anwendungssoftware gestartet oder begonnen werden soll. Es kann sich hierbei beispielsweise um eine Ladefunktion eines Betriebssystems der Prozessorschaltung handeln. Für den Fall, dass der Code manipuliert wurde, also nicht mehr den unmanipulierten Zustand aufweist, ergibt sich ein aktueller Hashwert, dessen resultierendes Ist-Muster von dem Soll-Muster verschieden ist oder zumindest besteht eine ausreichend große Wahrscheinlichkeit für einen solchen Unterschied. Da das Muster nur einen Teil des Hashwerts umfasst, ist theoretisch auch eine Manipulation des Codes möglich, bei welcher sich bei gleichbleibendem Nonce ein Ist-Muster ergibt, das mit dem Soll-Muster übereinstimmt, dies ist aber derart unwahrscheinlich, dass hierin ein ausreichend großer Schutz gesehen wird. Der Hashwert kann eine Bitsequenz aus mehreren Bits sein (z.B. 256 Bits oder 512 Bits) und das Soll-Muster und das Ist-Muster stellen jeweils nur eine Teilmenge dieser mehreren Bits dar, beispielsweise eine Teilmenge umfassend 8 Bits bis 64 Bit, um nur Beispiele zu nennen.

Zu beachten ist hier, dass in der Startfunktion kein Vergleich mit einem vollständigen Referenz-Hashwert erfolgen muss. Zudem kann das Soll-Muster unabhängig von dem übrigen, unmanipulierten Code vorgegeben sein. Z.B. kann als Soll-Muster vorgegeben werden, dass sich eine bestimmte Anzahl von führenden Nullen ergeben muss. In dem Hashwert des Codes wird mittels des Nonce das Soll-Muster eingestellt oder der Hashwert wird an dieses angepasst.

In vorteilhafter Weise muss kein Vergleich mit einem vollständigen Referenz-Hashwert vorgenommen werden, das heißt im Code muss auch kein Referenz-Hashwert gespeichert sein. Ansonsten könnte der Speicher derart manipuliert werden, dass sowohl der Code selbst, also die Anwendungsfunktionalität, als auch der Referenz-Hashwert im Speicher entsprechend angepasst oder manipuliert würde, damit manipulierter Code und manipulierter Referenz-Hashwert wieder zusammenpassen, ohne dass das Nonce neu ermittelt werden müsste. Hierdurch wäre dann die Manipulation kaschierbar. Kann stattdessen nur der Code manipuliert werden (mangels Referenz-Hashwert) und ist ein allgemeingültiges Soll-Muster für den Ist-Hashwert vorgegeben (z.B. eine bestimmte Anzahl führender Nullen), so muss nach einer Codemanipulation ein passendes Nonce gefunden werden, was in der beschriebenen Weise einen entsprechenden Aufwand für das Trial-and-Error-Suchverfahren zum Suchen eines passenden Nonce erfordert. Dies erschwert somit in vorteilhafter Weise das Manipulieren des Codes.

Die Erfindung umfasst auch Weiterentwicklungen oder Weiterbildungen, durch die sich zusätzliche Vorteile ergeben.

Um zu verhindern, dass der aktuelle Hashwert mit seinem Ist-Muster nicht ebenfalls einfach mit einem vorgegebenen Soll-Muster verglichen werden muss und damit durch Manipulieren des Speicherinhalts, der das Soll-Muster beschreibt, ebenfalls die Manipulation insgesamt kaschiert werden könnte, hat es sich als vorteilhaft erwiesen, das Ist-Muster zum Steuern des Ablaufs des Codes selbst dahingehend zu nutzen, dass kein Vergleich mit dem Soll-Muster stattfinden braucht, sondern das Ist-Muster als Steuersignal für den Ablauf des Codes an sich genutzt wird. Es gibt also kein "falsches" Ist-Muster, sondern der Code nimmt nur unterschiedliche Verläufe, je nach Ist-Muster. Eine Weiterentwicklung umfasst hierzu, dass die Startfunktion in Abhängigkeit von dem Ist-Muster ein Einsprungziel oder Sprungziel oder einen Funktionsaufruf in dem Code auswählt und das Ausführen des Codes durch einen Sprung zu dem Einsprungziel oder den Funktionsaufruf beginnt oder fortsetzt. Man kann also dem Code nicht "ansehen", welches Ist-Muster das "richtige" ist, um die Anwendungssoftware bestimmungsgemäß ablaufen zu lassen, also die Anwendungsfunktionalität auszulösen. Vielmehr ist die Startfunktion derart ausgestaltet, dass der Code an der Stelle ausgeführt wird, auf die durch das Ist-Muster verwiesen wird. Beispielsweise kann ein Programmzähler der CPU eines Mikroprozessors oder Mikrocontrollers gemäß dem Ist-Muster eingestellt werden. Es kann dabei entweder das Ist-Muster direkt als Sprungadresse in einen Speicherbereich, in welchem sich der Code befindet oder in welchem er abgelegt ist, interpretiert werden oder es kann das Ist-Muster indirekt mittels einer vorbestimmten Abbildungsfunktion in eine Speicheradresse oder Sprungadresse umgewandelt werden. Stimmt dann das Ist-Muster nicht mit dem Soll-Muster überein, erfolgt ein Einsprung in den Code an einer falschen oder ungeeigneten Stelle und es kommt nicht zu einem erfolgreichen Ausführen des Codes. Hier liegt die Erkenntnis zugrunde, dass für den Fall, dass man versucht, den Code zu manipulieren, dem Code in binärer Form (Binärcode) nicht anzusehen ist, welche Bitmuster gültige Einsprungadressen darstellen, dies würde zunächst ein aufwendiges Reverse-Engineering erfordern, was die Hürde für eine erfolgreiche Manipulation entsprechend hoch oder höher setzt.

Allerdings ist man daran interessiert, dass durch ein falsches Einsprungziel, wenn also das Ist-Muster nicht mit dem Soll-Muster übereinstimmt, hierdurch nicht ein unbeabsichtigtes Verhalten der Prozessortschaltung resultiert. Eine Weiterentwicklung umfasst hierzu, dass die Startfunktion eine Sprungtabelle vorsieht oder nutzt, in welcher mehrere mögliche Sprungadressen einem jeweiligen Tabellenindex zugeordnet sind, und die Startfunktion mittels des Ist-Musters einen Tabellenindex auswählt und die dem ausgewählten Tabellenindex zugeordnete Sprungadresse als Einsprungziel festlegt. Das Soll-Muster entspricht natürlich demjenigen Tabellenindex, dem die Startadresse einer Bootfunktion oder Haupt-Funktion (main function) der Anwendungssoftware zugeordnet ist. Eine Sprungtabelle kann eine Liste oder Aneinanderreihung von mehreren möglichen oder vorgesehenen Sprungadressen enthalten. Es können die Funktionsadressen direkt nacheinander angeordnet sein, wodurch sich der entsprechende Tabellenindex implizit als Offset ergibt. Alternativ kann eine paarweise Zuordnung eines Tabellenindex zu einer entsprechenden Sprungadresse vorgesehen sein, wodurch mögliche Ist-Muster als jeweiliger Tabellenindex explizit angegeben werden können. Das Ist-Muster kann also als Tabellenindex direkt genutzt werden oder es kann eine Abbildungsfunktion zwischengeschaltet sein, die das Ist-Muster auf einen Tabellenindex abbildet. Ist das Ist-Muster mit dem Soll-Muster identisch, so ergibt sich als Auswahl die Startadresse der Bootfunktion der Anwendungssoftware, das heißt die Anwendungssoftware wird in diesem Fall korrekt oder bestimmungsgemäß gestartet. Jede andere Sprungadresse in der Sprungtabelle kann dagegen von dieser Startadresse der Bootfunktion wegweisen oder von dieser verschieden sein.

Eine Weiterentwicklung umfasst hierzu, dass auch bei falschem Ist-Muster ein kontrollierter Sprung erfolgt. Die Sprungtabelle enthält dazu an zumindest einem übrigen, von dem Soll-Muster verschiedenen Tabellenindex eine Sprungadresse zu einer Endlosschleife und/oder zu einer Signalisierungsfunktion zum Signalisieren einer Codemanipulation. Indem die Prozessorschaltung oder das Ausführen des Codes in einer Endlosschleife gehalten wird, insbesondere in einer Endlosschleife ohne zusätzliche Funktionsausführung (auch als "Idling" bezeichnet) bleibt die Prozessorschaltung funktionslos, nachdem das Ist-Muster in die Endlosschleife geführt hat. Somit ist sichergestellt, dass keine unerwünschte oder unvorhergesehene Signalerzeugung durch die Prozessorschaltung erfolgt. Wird vor dem Eintritt in die Endlosschleife oder alternativ dazu zu einer Signalisierungsfunktion geführt oder zu dieser gesprungen, so kann zum Signalisieren der Codemanipulation beispielsweise ein Fehlereintrag in einem Fehlerspeicher erzeugt werden. Somit kann auch im Nachhinein erkannt werden, dass der Code im manipulierten Zustand gestartet wurde oder versucht wurde, ihn auszuführen. Dies kann zum Beispiel als Nachweis im Zusammenhang mit einer Garantiefrage genutzt werden.

Bisher wurde beschrieben, dass die Hashfunktion den aktuellen Hashwert auf der Grundlage des Codes (mit dem darin integrierten Nonce) erzeugt. Mit entsprechendem Aufwand könnte eine Manipulation dahingehend versucht werden, dass eine Kopie des Codes (zusammen mit dem Nonce) beschafft wird und vor einer Manipulation der Hashwert berechnet wird, um nach der Manipulation zu wissen, wie zusätzlich auch das Nonce verändert werden müsste (falls man dessen Position im Code kennt), um die Manipulation zu kaschieren. Dies kann zusätzlich in folgender Weise erschwert werden.

Eine Weiterentwicklung umfasst, dass die Hashfunktion eine kryptographische Hashfunktion ist, die den Hashwert aus einer Kombination aus dem Code und einem kryptographischen Schlüssel der Prozessorschaltung bildet. Bei der Hashfunktion ist somit der resultierende oder sich ergebende Hashwert auch zusätzlich abhängig von dem kryptographischen Schlüssel, also einer weiteren Bitfolge oder Ziffernfolge, die für eine erfolgreiche Manipulation bekannt sein muss. Dieser Schlüssel kann der Prozessorschaltung zugeordnet sein, beispielsweise in einem Register der Prozessorschaltung gespeichert sein. Ist der Schlüssel unbekannt, so nützt die Kenntnis des ursprünglichen Hashwerts mit dem Soll-Muster und die Kenntnis des Nonce nichts oder reicht nicht aus, um eine Manipulation durch Anpassen des Nonce zu kaschieren.

Allerdings kann versucht werden, aus der Prozessorschaltung auch einen solchen kryptographischen Schlüssel auszulesen. Eine Weiterentwicklung umfasst deshalb, dass der kryptographische Schlüssel zur Laufzeit der Startfunktion aus einem Sicherheitsmodul der Prozessorschaltung empfangen wird. Mit anderen Worten ist der kryptographische Schlüssel im deaktivierten oder abgeschalteten Zustand der Prozessorschaltung nicht auslesbar oder unerreichbar. Wird die Prozessorschaltung gestartet, so wird der kryptographische Schlüssel zur Laufzeit an die Startfunktion übergeben, sodass nur in demjenigen Zeitraum, während der kryptographische Schlüssel an die Startfunktion als Eingabeparameter übergeben wird, dieser Schlüssel sichtbar ist. Zu einem solchen Zeitpunkt muss aber die Prozessorschaltung laufen, was einen Zustand darstellt, der sich im RAM (Random Access Memory) der Prozessorschaltung abspielt und in der Regel um ein Vielfaches aufwändiger zu beobachten oder auszuspionieren ist als der nichtflüchtige Speicher einer deaktivierten oder abgeschalteten Prozessorschaltung. Somit wird das Manipulieren des Codes zusätzlich erschwert.

Eine Weiterentwicklung umfasst, dass durch die Hashfunktion der Hashwert mittels eines HMAC-Verfahrens (Hash-based Message Authentication Code) ermittelt wird. Die Hashfunktion bietet die Möglichkeit der Kombination aus einer Berechnung des Hashwerts aus dem Code an sich sowie eines zusätzlichen kryptographischen Schlüssels. Die RFC 2104 (RFC - Request for Comment Dokument) definiert eine kryptographische Hashfunktion für gängige Hashing-Algorithmen, wie dem SHA2 oder SHA3 als Hash-Funktion. Ein Hashwert ist damit ein für alle praktischen Fälle eindeutiger Fingerabdruck einer Nachricht MSG, der einen geheimen Key verwendet, um die Authentizität einer Nachricht zu sichern.

Eine Weiterentwicklung umfasst, dass durch die Hashfunktion der Hashwert mittels eines CMAC-Verfahrens (Cipher-based Message Authentication Code) ermittelt wird, welches einen symmetrischen Blockcipher-Algorithmus verwendet (z.B. AES, SIMECK). Bei CMAC wird eine Blockchiffre (BC) eingesetzt, um die allgemeine Forderung nach Kollisionssicherheit und der Eigenschaft als Einwegfunktion zu erfüllen. Ein besonderer Vorteil eines CMAC ist, dass es als Hardware-Implementierung (also Software-unabhängig beispielsweise als FPGA oder ASIC (Application Specific Integrated Circuit) verfügbar ist. Dies ist insbesondere bei Mikrocontrollern der Fall, die für Steuergeräte insbesondere für Kraftfahrzeuge verfügbar sind. Ein AES-basierter CMAC Algorithmus ist in ein Hardware-Security-Module, HSM, integriert und mit Hardware-beschleunigung implementiert, was in vorteilhafter Weise dazu beiträgt, die beschriebene Zeitdauer ΔT für die CMAC Berechnung für einen Applikations-Codeblock zu minimieren (die "Message" MSG für den CMAC ist hierbei der Code AC der Anwendungssoftware). Häufig wird dabei der AES128 Algorithmus verwendet, der schon in der Automotive-Industrie im Rahmen der EVITA Initiative als Standard für Secure Boot spezifiziert wurde. Heute findet man SHE Module (SHE = Security Hardware Extension) nach dem EVITA-Light Standard (-Light, -Medium, -Full) sogar in kleineren Mikrocontrollern integriert, während man die Unterstützung der Hashing-Algorithmen und der asymmetrischen Verschlüsselungsverfahren nur bei größeren Mikrocontrollern unter dem Begriff HSM oder HSE findet.

Eine Weiterentwicklung umfasst, dass die Startfunktion als ein Bestandteil einer Parallel-Boot-Prozedur ausgeführt wird. Das Verfahren steht somit der eingangs beschriebenen Parallel-Boot-Prozedur nicht entgegen, sondern kann in diese integriert werden.

Die Parallel-Boot-Prozedur umfasst, dass die Startfunktion in einer CPU eines Mikroprozessors oder eines Mikrocontrollers der Prozessorschaltung ausgeführt wird, wo auch der Code auszuführen ist, und währenddessen in einem Hardware-Security-Module, HSM, der Prozessorschaltung (hardwarebasiertes Sicherheitsmodul) mittels einer weiteren Hashfunktion ein weiterer Hashwert des Codes berechnet und vollständig mit einem vorgegeben Referenz-Hashwert (nicht nur einem Muster) verglichen wird. Falls erkannt wird, dass der weitere Hashwert von dem Referenz-Hashwert verschieden ist, wird durch das HSM mittels eines Blockiersignals eine weitere Ausführung des Codes blockiert. Durch die beschriebene Steuerung des Ablaufs des Codes der Anwendungssoftware in Abhängigkeit von dem Ist-Muster oder durch das Ist-Muster wird erreicht, dass der Start des Codes selbstblockierend ausgestaltet ist, falls der Code manipuliert wurde. Sollte aber die Manipulation erfolgreich kaschiert werden können, so kann im Nachhinein durch die Überprüfung im HSM nach Ablauf der Zeitdauer ΔT dennoch eine Manipulation erkannt werden und dann mittels des Blockiersignals zumindest die weitere Ausführung des Codes blockiert werden. Das Blockiersignal kann beispielsweise ein Reset-Signal sein, welches die Prozessorschaltung durch einen Reset neu startet. Alternativ dazu kann durch das Blockiersignal ein Programmzähler der Prozessorschaltung angehalten werden, was ein weiteres Beispiel für ein wirkungsvolles Blockieren der Ausführung des Codes darstellt.

Als eine weitere Lösung umfasst die Erfindung eine Prozessorschaltung, in welcher ein Code einer Software zum Ausführen gespeichert ist, wobei die Prozessorschaltung zum Absichern des Codes gegen eine Ausführung nach einer Manipulation dazu angepasst ist, eine Ausführungsform des beschriebenen Verfahrens durchzuführen. Die Prozessorschaltung kann insbesondere als ein Mikrocontroller ausgestaltet sein, wie er für ein Steuergerät eines Kraftfahrzeugs vorgesehen sein kann. In einer solchen Prozessorschaltung kann zum einen die CPU (Central Processing Unit) für das Ausführen des Codes der Anwendungssoftware vorgesehen sein. Zusätzlich kann in der beschriebenen Weise ein Hardware-Security-Module, HSM, in einem solchen Mikroprozessor bereitgestellt sein. In dem HSM kann in an sich bekannter Weise ein kryptographischer Schlüssel gespeichert sein, der zudem individuell für die Prozessorschaltung ausgelegt oder erzeugt sein kann. Zudem kann in der HSM ein Referenz-Hashwert oder Soll-Hashwert gespeichert sein, welcher als Vergleichsgrundlage für den Vergleich mit dem Ist-Hashwert oder dem aktuellen Hashwert des Codes zugrundegelegt werden kann. Unabhängig davon kann in der CPU der Prozessorschaltung selbst, die auch für das Ausführen des Codes der Anwendungssoftware genutzt wird, vorab in der beschriebenen Weise anhand des Ist-Musters das Ablaufen des Codes gesteuert werden, sodass hierdurch noch vor Ablauf der Prüfung des Hashwerts durch das HSM erkannt werden kann, ob der Code manipuliert wurde. Die CPU kann eine CMAC oder HMAC schneller ausführen als ein HSM, sodass sich keine Verzögerung von ΔT ergibt.

Als eine weitere Lösung umfasst die Erfindung ein Steuergerät für ein Kraftfahrzeug, wobei das Steuergerät eine Ausführungsform der beschriebenen Prozessorschaltung umfasst. Das Steuergerät kann beispielsweise in an sich bekannter Weise zum Steuern einer Fahrzeugkomponente, beispielsweise eines Aktors oder eines Sensors oder zum Bereitstellen einer Fahrzeugfunktionalität, wie beispielsweise das Ausgeben eines Audiosignals oder Videosignals, vorgesehen sein. Beispiele für Steuergeräte sind: ein Fensterheber, eine Schiebedachsteuerung, eine Sitzstellung, ein Kombiinstrument, ein Motorsteuergerät, eine Zentralverriegelung, um nur Beispiele zu nennen. Insbesondere handelt es sich um ein Steuergerät, das deaktiviert gehalten wird (Programmzähler steht still oder ist angehalten), und bei Betätigen einer Taste oder allgemein eines Bedienelements durch einen Benutzer wird die Prozessorschaltung gebootet. Die hier genannte Fahrzeugfunktionalität entspricht der bereits beschriebenen allgemeinen Applikationsfunktionalität.

Als eine weitere Lösung umfasst die Erfindung ein Kraftfahrzeug mit zumindest einem Steuergerät, das eine jeweilige Ausführungsform des beschriebenen Steuergeräts darstellt. Das Kraftfahrzeug kann beispielsweise als Personenkraftwagen oder Lastkraftwagen oder Motorrad oder Flurförderfahrzeug ausgestaltet sein.

Die Erfindung umfasst auch die Kombinationen der Merkmale der beschriebenen Weiterbildungen.

Im Folgenden ist ein Ausführungsbeispiel der Erfindung beschrieben. Hierzu zeigt:
- Fig. 1: eine schematische Darstellung einer Ausführungsform des erfindungsgemäßen Kraftfahrzeugs;
- Fig. 2: eine schematische Darstellung einer Prozessorschaltung, wie sie in einem Steuergerät des Kraftfahrzeugs von Fig. 1 bereitgestellt sein kann;
- Fig. 3: ein Diagramm zur Veranschaulichung eines Secure-Boot-Verfahrens.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

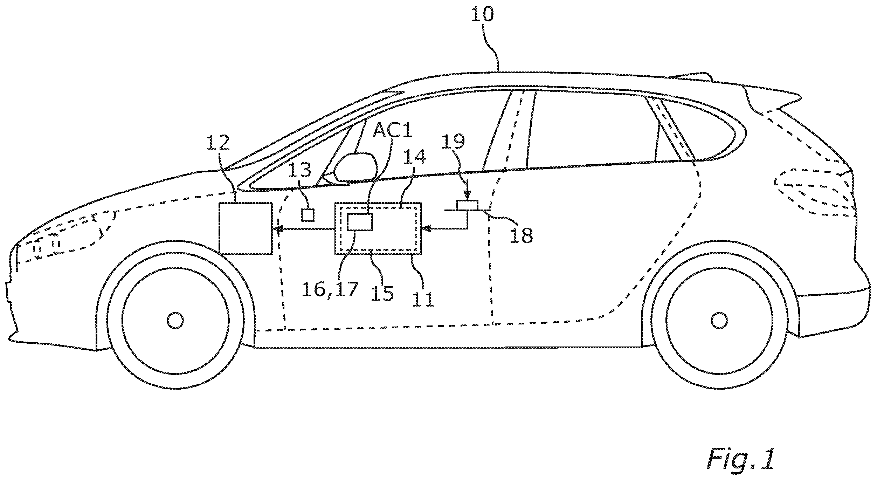

Fig. 1 zeigt ein Kraftfahrzeug 10, bei dem es sich beispielsweise um einen Kraftwagen handeln kann, der beispielsweise als Personenkraftwagen oder Lastkraftwagen ausgestaltet sein kann. In dem Kraftfahrzeug 10 kann sich ein Steuergerät 11 befinden, das eine Fahrzeugkomponente 12 steuern kann. Die Fahrzeugkomponente 12 kann beispielsweise ein Aktor sein, beispielsweise ein Elektromotor, und/oder sie kann ein Sensor sein, beispielsweise ein Temperatursensor. Wie bereits beschrieben, kann es sich bei der Fahrzeugkomponente 12 beispielsweise um einen Fensterheber oder ein Schiebedach oder eine Schließanlage des Kraftfahrzeugs 10 handeln, um nur Beispiele zu nennen.

Zum Erzeugen von Steuersignalen 13 kann in dem Steuergerät 11 eine Prozessorschaltung 14 bereitgestellt sein, die die Steuersignale 13 gemäß einer Anwendungsfunktionalität 15 erzeugen kann, die durch eine Anwendungssoftware AC1 festgelegt oder erzeugt sein kann. Die Anwendungssoftware AC1 kann hierzu einen Programmcode oder kurz Code 16 umfassen, der in einem nicht-flüchtigen Datenspeicher 17, beispielsweise einem Flash-Speicher, in der Prozessorschaltung 14 gespeichert sein kann. Um die Anwendungsfunktionalität 15 auszulösen oder zu starten, beispielsweise bei einem Fensterheber das Öffnen oder Schließen eines Fensters zu starten, kann ein Bedienelement 18 bereitgestellt sein, das beispielsweise eine Taste oder einen Kippschalter oder eine berührungssensitive Oberfläche aufweisen kann. Wird durch einen Benutzer eine Bedienhandlung 19 an dem Bedienelement 18 ausgeführt (z.B. Drücken einer Taste), so kann hierdurch in dem Steuergerät 11 die Prozessorschaltung 14 dahingehend aktiviert werden, dass die Applikationssoftware gestartet wird und somit der Code AC1 durch die Prozessorschaltung 14 ausgeführt wird, was zum Erzeugen der Steuersignale 13 führt.

Bei dem Kraftfahrzeug 10 und dessen Steuergerät 11 ist vermieden oder zumindest erschwert, dass durch eine Manipulation des Codes AC1 erreicht werden kann, dass unerwünschte oder von einem Hersteller des Steuergeräts 11 unerwünschte oder ungeplante Steuersignale 13 erzeugt werden. Hierdurch kann beispielsweise ein sogenanntes Chip-Tuning erschwert oder blockiert werden.

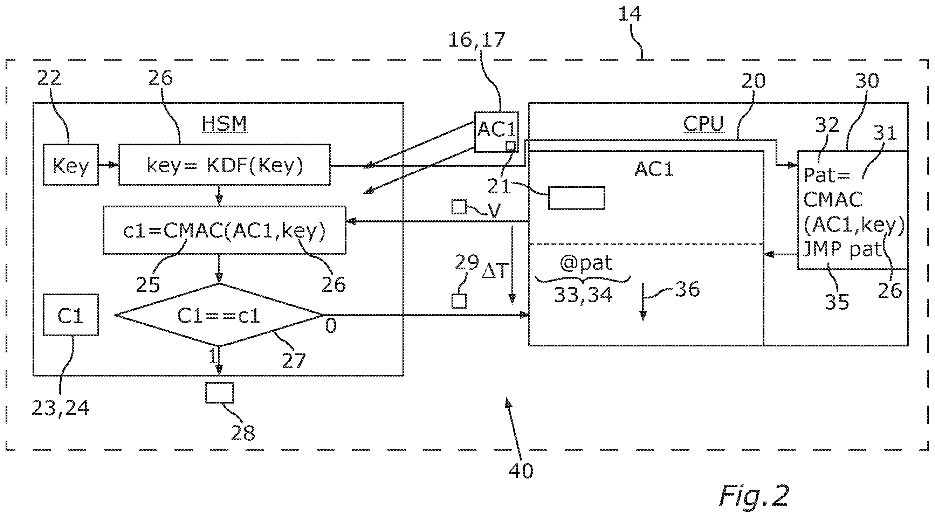

Fig. 2 veranschaulicht, wie in der Prozessorschaltung 14 der Code 16 der Anwendungssoftware AC1 beim Starten der Ausführung oder des Ausführens des Codes AC1 auf Authentizität oder Echtheit oder Manipulationsfreiheit geprüft werden kann.

Fig. 2 stellt hierzu dar, wie die Prozessorschaltung 14 für das Ausführen des Codes AC1 eine CPU aufweisen kann. Der Code AC1 kann in einen Arbeitsspeicher 20 (RAM) geladen werden, von wo aus er durch die CPU abgearbeitet oder ausgeführt werden kann, wie dies an sich bekannt ist. Es kann auch eine Ausführung aus dem Datenspeicher 17 heraus vorgesehen sein. In dem Code AC1 kann zusätzlich ein Nonce 21 integriert sein, das heißt ein Speicherbereich, in welchem eine Zahl oder Bitfolge gespeichert ist, deren Inhalt verändert werden kann oder nach dem Fertigstellen der Anwendungsfunktionalität 15 hinzugefügt werden kann, ohne die Anwendungsfunktionalität 15 an sich zu verändern. Es kann sich beispielsweise um ein Array aus Bytes handeln.

In der Prozessorschaltung 14 kann zusätzlich zur CPU ein Hardware-basiertes Sicherheitsmodul HSM vorgesehen sein, in welchem in an sich bekannter Weise ein von außerhalb des HSM nicht auslesbarer kryptographischer Prozessorschlüssel 22 (hier dargestellt als Symbol "Key") gespeichert sein kann. Des Weiteren kann eine Speicherstelle 23 vorgesehen sein, die ebenfalls nichtauslesbar ausgestaltet sein kann, deren Inhalt (hier repräsentiert als C1) beim Speichern des Codes AC1 festgelegt werden kann. Es kann sich hierbei um einen Referenz-Hashwert 24 handeln, der für den Code AC1 in dessen unmanipulierten oder werksseitigen Zustand gebildet wurde.

Zum Starten der Ausführung des Codes AC1 kann vorgesehen sein, dass der Code AC1 in das HSM eingelesen wird, damit (angestoßen durch ein Verifizierungssignal V der CPU) mittels einer Hashfunktion 25 über den Code AC1 und einen abgeleiteten kryptographischen Schlüssel 26 ein aktueller Hashwert c1 des Codes AC1 zusammen in Kombination mit dem abgeleiteten kryptographischen Schlüssel 26 berechnet wird. Die Hashfunktion 25 kann hierzu ein CMAC-Algorithmus sein. In einem Hashwertvergleich 27 kann überprüft werden, ob der aktuelle Hashwert c1 mit dem Referenz-Hashwert 24 (symbolisiert durch C1) übereinstimmt. Ist dies der Fall, so ist kein weiterer Eingriff notwendig, das heißt die CPU kann mit der Ausführung des Codes AC1 fortfahren, das heißt es kann eine Inaktivität 28 des HSM folgen. Stimmen dagegen der aktuelle Hashwert c1 und der Referenz-Hashwert C1 nicht überein, so kann ein Blockiersignal 29 erzeugt werden, welches eine weitere Ausführung des Codes AC1 in der CPU blockiert, z.B. durch einen Reset.

Diese Überprüfung benötigt allerdings eine Zeitdauer ΔT, die allerdings bei der Prozessorschaltung 14 nicht dazu führt, dass das Ausführen oder der Start der Ausführung des Codes AC1 entsprechend verzögert wird.

Vielmehr ist vorgesehen, dass der abgeleitete kryptographische Schlüssel 26 mittels einer KDF (Key Derivation Function) aus dem Prozessorschlüssel 22 erzeugt oder abgeleitet wird (wofür die KDF beispielsweise eine Hashfunktion sein kann) und der abgeleitete kryptographische Schlüssel 26 auch in der CPU bereitgestellt wird, wo er durch eine Startfunktion 30 empfangen oder genutzt werden kann.

Mittels der Startfunktion 30 kann auf Grundlage einer Hashfunktion 31, die von der Hashfunktion 25 verschieden sein kann oder mit dieser übereinstimmen kann, aus dem Code AC1 und dem kryptographischen Schlüssel 26 ein aktueller Hashwert berechnet werden, von dem aber lediglich ein Ist-Muster 32 (respräsentiert als pat - pattern) genutzt oder ausgewertet wird, also nur eine Teilmenge der Bits des vollständigen aktuellen Hashwerts. Beispielsweise kann vorgesehen sein, dass das Ist-Muster 32 als eine Sprungadresse 33 (@pat) oder ein Einsprungziel 34 in den Code AC1 interpretiert wird und ein entsprechender Sprung 35 an die Sprungadresse 33 ausgeführt wird (in Fig. 2 symbolisiert durch den Maschinenbefehl Jump: JMP pat). Dies bedeutet, dass beispielsweise der Programmzähler der CPU auf die Sprungadresse 33 im Code AC1 gestellt wird. Von da ausgehend kann dann das Ausführen 36 des Codes AC1 fortgeführt werden.

Das Berechnen der Hashfunktion 31 durch die CPU und der Sprung 35 können in weniger als der Zeitdauer ΔT erfolgen, während welcher in dem HSM die Berechnung oder Ausführung der Hashfunktion 25 und der Hashwertvergleich 27 durchgeführt werden. Somit kann das Ausführen des Codes AC1 in der CPU bereits begonnen werden, bevor der Hashwertvergleich 27 fertig ausgeführt ist. Ist der Code AC1 manipuliert, so ergibt bei gleichbleibendem oder unverändertem Nonce 21 das Ausführen der Hashfunktion 31 ein Ist-Muster 32, das bei dem Sprung 35 nicht zu der Sprungadresse 33 führt. Die korrekte Sprungadresse 33 / das korrekte Einsprungziel 34 stellt somit ein Soll-Muster dar. Somit ergibt sich eine nicht-funktionsfähige Anwendungssoftware AC1 in der Prozessorschaltung 14 im Falle eines manipulierten Codes AC1. An der Sprungadresse 33 kann beispielsweise eine Bootfunktion oder Hauptfunktion für die Anwendungssoftware AC1 oder die Anwendungsfunktionalität 15 beginnen.

Insgesamt ergibt sich durch den parallelen vorzeitigen Start an der Sprungadresse 33 und der nachträglichen Verifizierung mittels des Hashwertvergleichs 27 eine Parallel-Boot-Prozedur 40 in der Prozessorschaltung 14.

Fig. 3 veranschaulicht noch einmal, wie ohne die Nutzung der Startfunktion 30 in einer herkömmlichen Prozessorschaltung 50 mittels eines HSM und einer CPU der Start der Ausführung des Codes AC1 durch die CPU erst nach Empfang eines Aktivierungssignals 51 aus dem Hashvergleich 27 (aktueller Hashwert h1 ist identisch zum Referenz-Hashwert H1) beginnen kann.

Hierbei kann der Prozessorschlüssel 22 (Key) unmittelbar in der Hashfunktion HMAC verwendet werden, da der Prozessorschlüssel 22 nicht ausgegeben wird an die CPU und somit nie von außen sichtbar ist. In Fig. 2 ist dagegen durch die KDF sichergestellt, dass bei Nutzung des abgeleiteten kryptographischen Schlüssels 26 in der CPU hieraus kein Rückschluss auf den Prozessorschlüssel 22 möglich ist. Die KDF ist hierzu insbesondere eine sogenannte Einwegfunktion, wie es beispielsweise mittels einer Modulo-Operation und/oder einer Hash-Funktion, beispielsweise SHA256, erreicht werden kann.

Die beiden Algorithmen AES bzw. SHA sind ebenfalls Einwegfunktionen und damit nicht umkehrbar, das heißt zur Bestimmung eines gewünschten CMAC oder HMAC müsste man mittels "Durchprobieren" oder Trial-and-Error (*brute-force*) selbst mit den größten zur Verfügung stehenden Rechnern extrem lange probieren: Schon bei einem 128 bit CMAC benötigte man dazu im Mittel 2¹²⁷ ≈ 10³⁸ Versuche. Selbst wenn man pro Versuch nur 1 µs bräuchte, würden doch noch mehr als 10²⁴ Jahre benötigt, was als praktisch unmöglich gilt. Darauf beruht die kryptographische Stärke der Verfahren.

Wenn man aber nicht den gesamten möglichen Wertebereich des CMAC von 128 bit durchsucht, sondern gerade so viel, wie man durchaus mit vorbestimmten Aufwand noch leisten kann, so kann man sich auf bestimmte CMAC Werte beschränken, welche ein bestimmtes vorgegebenes Muster z.B. in 32 bit des CMAC erreicht wird. Ein solches 32 bit Muster kann im Mittel in 2·10⁹ Versuchen ermittelt werden, und zwar offline, keinesfalls in der Prozessorschaltung (also weder in der / CPU noch im HSM).

Um in Echtzeit auf dem Embedded-System nur einen CMAC berechnen zu müssen, wird zunächst die Nachricht MSG, in diesem Fall der Applikationscode AC1 oder AC in eine Anzahl N Blöcke mit gleicher Anzahl Bytes unterteilt:

| | | | |
|---|---|---|---|
| | AC = MSG = [*m*₁,*m*₂, ... *m_{N}*] | | |
| | *x ∈* {1,2, *... N*} | beliebig | (3.1) |
| | *mₓ* | Nonce | |

Man bestimmt einen Codeblock *mₓ,* den man als *Nonce* (= beliebige, zufällige Bytefolge) verwendet, den man beliebig verändern kann, ohne das Verhalten der Applikation zu beeinflussen, etwa weil *mₓ* Teil eines unbenutzten oder redundanten Speicherbereichs ist. Mit dieser Festlegung kann man eine Suche mit zufälligen Nonce-Werten starten, die einen CMAC (oder HMAC) zum Ergebnis hat, in dem ein bestimmtes Muster (pattern) im Ergebnis zu finden ist.

Diese Mustersuche ist zunächst ähnlich dem "proof-of-work" Prinzip bei Kryptowährungen, die einen zufällig gewählten *Nonce* derart erfolgt, dass ein Hashwert (typ. 256 bit) über den *Nonce* und über Hashwerte zuvor ermittelter Währungseinheiten eine vorgegebene Mindestanzahl von führenden Nullen aufweist (z.B.: 19 Hex-Stellen) und damit als "wertvoll" im Sinne einer Kryptowährung gilt. Die Mindestanzahl und damit der Schwierigkeitsgrad wird fortlaufend erhöht, so dass das "Schürfen" von derartigen Kryptowährungen nur mit bekanntermaßen großem und stets steigendem Aufwand an Ressourcen geleistet werden kann.

Ähnlich dazu wird auch in dieser offengelegten Erfindung ein Muster in einem CMAC (oder HMAC) bestimmt, mit dem Ziel ein Muster (pattern pat), mit dem in kurzer Zeit die CMAC Berechnung falsifiziert werden kann, also festgestellt werden kann, ob der Applikationscode NICHT authentisch oder NICHT integer ist (siehe das "0" Ergebnis in Fig. 2). Damit kann etwa die Applikation oder allgemein eine Startfunktion, unabhängig vom HSM den CMAC (oder HMAC) berechnen, und sicher bestimmen, ob der zugrunde liegende Code AC NICHT authentisch ist: Dies ist möglich ohne explizite Speicherung des erwarteten Werts C (oder H) im Code der Applikation. Ein explizites Speichern eines Referenz-Hashwerts C (oder H) außerhalb des HSM ist aus Gründen der Sicherheit (Security) nicht gewünscht und auch aufwändig zu realisieren, da man den Speicherbereich für den erwarteten Wert C (oder H) von der Berechnung ausnehmen müsste, ähnlich der Signatureinbettung beim PE (Portable Executable) Format.

Gemäß der Idee wird ein somit Verfahren gemäß Fig. 2 vorgeschlagen. Das HSM erreicht eine Nachricht oder eine Signal V, den Applikationscode (AC1) zu überprüfen (*verify*)*.* Das HSM sendet daraufhin einen per kryptographischer Schlüsselableitung (KDF) ermittelten abgeleiteten *key* an den Applikations-Mikrocontroller CPU, der unmittelbar nach Erhalt des *key* die Berechnung eines CMAC beginnt, die das Ergebnis c1 mit der vorberechneten Muster-Eigenschaft pat hat. Bei unverändertem, also authentischem Applikationscode AC1 kann diese Eigenschaft verwendet werden, um den Applikations-Code AC1 durch einen berechneten Sprung (JMP pat) auszuführen. Je nach gewähltem Schwierigkeitsgrad bei der Musterberechnung ist die Wahrscheinlichkeit, dass der Applikationscode AC1 NICHT authentisch und integer ist, wenn pat richtig ist, sehr klein.

Gemäß der Idee kann mit dieser -nicht endgültigen Sicherheit- der Applikationscode AC1 ausgeführt werden, während das HSM möglicherweise noch mit anderen Aufträgen beschäftigt ist. Wenn dann im HSM tatsächlich der Auftrag zur Berechnung des CMAC c1 abgearbeitet wird, steht als vorläufiges Ergebnis fest, dass AC1 mit hoher Wahrscheinlichkeit authentisch ist, und schon ausgeführt wird, denn dann wurde das Sprungziel applikationsseitig korrekt berechnet.

Für den Fall, dass der Code nicht authentisch (integer) ist, wird als erste Konsequenz die vorberechnete Eigenschaft pat und damit das Sprungziel falsch sein. Eine vorteilhafte Ausprägung des erfindungsgemäßen Verfahrens kann darin bestehen, alle anderen möglichen Sprungziele als pat durch auf eine endlose Warteschleife zu leiten.

Nachdem das HSM nach einer Zeit bestätigen kann, dass der berechnete CMAC c1 ungleich C1 ist (Ergebnis "0"), kann die Applikations-CPU endgültig deaktiviert werden, etwa durch einen nicht maskierbaren Reset.

Das folgende Beispiel veranschaulicht noch einmal den zusätzlichen Berechnungsaufwand, der für eine Manipulation notwendig wäre. Ein Applikationscode-Datei habe eine Größe von 131072 byte = 8192·16 byte. Darin enthalten ist ein 16-byte Nonce, der nach (3.1) willkürlich durch den ersten Block *m*₁ des Applikationscode AC definiert wird. Die Zahl der 16 byte Blöcke beträgt also *N* = 8192. Die Berechnung eines AES128 Blocks benötigt dabei knapp 5 ns (PC). Die Berechnung eines kompletten CMAC benötigt damit auf einem PC

*T_{CMAC}* ≈ 8000·5 ns = 40 µs: $c = AES 128 - CMAC \left(\left[{m}_{1}=random\left(\right), {m}_{2}, {m}_{3}, … {m}_{N}\right], Key\right)$

Als Muster wird der 32 bit Wert pat = 0x04030201 definiert, der auf der Applikations-CPU die Anfangsadresse ist, an dem der Applikationscode nach dem erfindungsgemäßen Verfahren gemäß Bild 2 bei authentischem Code ausgeführt werden soll.

Nach ca. *M* = 2·10⁹ Berechnungen mit jeweils unterschiedlichen Zufallswerten *m*₁ = random() erhält man das Ergebnis mit dem definierten Muster pat, wofür man die mittlere Zeit ${T}_{pat} = M ⋅ {T}_{CMAC} = 2 ⋅ {10}^{9} ⋅ 4 ⋅ {10}^{- 5} s = 1.2 ⋅ {10}^{5} s = 22 h$ benötigt:

| | |
|---|---|
| Nonce *m*₁ | 0x616e4c66 53b0ca42 42700265 a6ba2024 |
| CMAC *c* | 0x04030201 383bd99e 17ab5696 dc2cbd75 = pat |

Zu jedem beliebigen anderen 32 bit Muster pat ist ein vergleichbarer mittlerer Zeitaufwand auf einem PC notwendig. Auf der Applikationsseite wird zur Erreichung des Ergebnisses nur die Berechnung genau eines CMAC benötigt, unter der Annahme, dass die Applikations-CPU für einen AES Block etwa 2 µs benötigt, gelingt dies in Tc = 8000·2 µs = 16 ms, was für die meisten Echtzeitanwendungen im Fahrzeug hinreichend kurz ist (typische Forderung: maximale Startzeit kleiner 50 ms).

Bemerkenswert ist weiterhin, dass einem möglichen Angreifer die Festlegung der Adresse des Nonce ebenso verborgen bleibt, wie der Key. Somit ist der Aufwand, das erfindungsgemäße Verfahren anzugreifen, sehr viel größer, als die Berechnungszeit Tₚₐₜ zur Ermittlung eines Nonce im Sinne des erfindungsgemäßen Verfahrens.

### Bezugszeichenliste

- 10: Kraftfahrzeug
- 11: Steuergerät
- 12: Fahrzeugkomponente
- 13: Steuersignale
- 14: Prozessorschaltung
- 15: Anwendungsfunktionalität
- 16: Code
- 17: Datenspeicher
- 18: Bedienelement
- 19: Bedienhandlung
- 20: Arbeitsspeicher
- 21: Nonce
- 22: Prozessorschlüssel
- 23: Speicherstelle
- 24: Referenz-Hashwert
- 25: Hashfunktion
- 26: Schlüssel
- 27: Hashvergleich
- 28: Inaktivität
- 29: Blockiersignal
- 30: Startfunktion
- 31: Hashfunktion
- 32: Ist-Muster
- 33: Sprungadresse
- 34: Einsprungziel
- 35: Sprung
- 36: Ausführen
- 40: Parallel-Boot-Prozedur
- 50: Prozessorschaltung
- 51: Aktivierungssignals

## Patentansprüche

1. Verfahren zum Absichern einer Prozessorschaltung (14) gegen eine Ausführung eines manipulierten Codes (16) einer Anwendungssoftware,
wobei in dem Code (16) ein Nonce (21) bereitgestellt wird, welches in Kombination mit dem übrigen, unmanipulierten Code (16) bei Anwenden einer Hashfunktion (25) auf den Code (16) einen Hashwert ergibt, der ein vorbestimmtes Soll-Muster aufweist,
wobei das Soll-Muster eine von dem übrigen, unmanipulierten Code (16) unabhängig gemachte Vorgabe in Bezug auf eine Teilmenge der Bitsequenz des Hashwerts darstellt,
und zum Starten der Ausführung des Codes (16) eine codeinterne oder codeexterne Startfunktion (30) auf den Code (16) mit dem darin integrierten Nonce (21) die Hashfunktion (25) anwendet, um einen aktuellen Hashwert des zu prüfenden Codes (16) zu berechnen, wobei der aktuelle Hashwert ein Ist-Muster (32) ergibt, und die Ausführung des Codes (16) in Abhängigkeit von dem Ist-Muster (32) gesteuert wird,
wobei der Code (16) nur dann erfolgreich ausgeführt wird wenn das Ist-Muster (32) mit dem Soll-Muster übereinstimmt.

2. Verfahren nach Anspruch 1, wobei die Startfunktion (30) in Abhängigkeit von dem Ist-Muster (32) ein Einsprungziel (34) in den Code (16) auswählt und das Ausführen (36) des Codes (16) durch einen Sprung (35) zu dem Einsprungziel (34) beginnt oder fortsetzt.

3. Verfahren nach Anspruch 2, wobei die Startfunktion (30) eine Sprungtabelle vorsieht, in welcher mehrere mögliche Sprungadressen (33) einem jeweiligen Tabellenindex zugeordnet sind, und die Startfunktion (30) mittels des Ist-Musters (32) einen Tabellenindex auswählt und die dem ausgewählten Tabellenindex zugeordnete Sprungadresse (33) als Einsprungziel (34) festlegt, wobei das Soll-Muster denjenigen Tabellenindex angibt, dem die Startadresse einer Bootfunktion der Anwendungssoftware zugeordnet ist.

4. Verfahren nach Anspruch 3, wobei die Sprungtabelle an zumindest einem übrigen, von dem Soll-Muster verschiedenen Tabellenindex eine Sprungadresse (33) zu einer Endlosschleife und/oder zu einer Signalisierungsfunktion zum Signalisieren einer Codemanipulation, enthält.

5. Verfahren nach einem der vorhergehenden Ansprüche, wobei die Hashfunktion (25) eine kryptographische Hashfunktion (25) ist, die den Hashwert aus einer Kombination aus dem Code (16) und einem kryptographischen Schlüssel (26) der Prozessorschaltung (14) bildet.

6. Verfahren nach Anspruch 5, wobei der kryptographische Schlüssel (26) zur Laufzeit der Startfunktion (30) aus einem Sicherheitsmodul der Prozessorschaltung (14) empfangen wird.

7. Verfahren nach einem der vorhergehenden Ansprüche, wobei durch die Hashfunktion (25) der Hashwert mittels eines HMAC-Verfahrens ermittelt wird.

8. Verfahren nach einem der vorhergehenden Ansprüche, wobei durch die Hashfunktion (25) der Hashwert mittels eines CMAC-Verfahrens ermittelt wird, welches einen symmetrischen Blockcipher-Algorithmus verwendet.

9. Verfahren nach einem der vorhergehenden Ansprüche, wobei die Startfunktion (30) als ein Bestandteil einer Parallel-Boot-Prozedur (40) ausgeführt wird, wobei die Parallel-Boot-Prozedur (40) umfasst, dass die Startfunktion (30) in einem Mikroprozessor oder einem Mikrocontroller der Prozessorschaltung (14) ausgeführt wird, wo auch der Code (16) auszuführen ist, und währenddessen in einem Hardware-Security-Module, HSM, der Prozessorschaltung (14) mittels einer weiteren Hashfunktion (25) ein weiterer Hashwert des Codes (16) berechnet und vollständig mit einem vorgegeben Referenz-Hashwert (24) verglichen wird und falls erkannt wird, dass der weitere Hashwert von dem Referenz-Hashwert (24) verschieden ist, durch das HSM mittels eines Blockiersignals (29) eine weitere Ausführung des Codes (16) blockiert wird.

10. Prozessorschaltung (14), in welcher ein Code (16) einer Anwendungssoftware zum Ausführen (36) gespeichert ist, wobei die Prozessorschaltung (14) zum Absichern des Codes (16) gegen eine Ausführung nach einer Manipulation dazu angepasst ist, ein Verfahren nach einem der vorhergehenden Ansprüche durchzuführen.

11. Steuergerät (11) für ein Kraftfahrzeug (10), wobei das Steuergerät (11) eine Prozessorschaltung (14) nach Anspruch 10 umfasst.

12. Kraftfahrzeug (10) mit zumindest einem Steuergerät (11) nach Anspruch 11.

## Claims

1. A method for securing a processor circuit (14) against execution of a manipulated code (16) of an application software,
wherein a nonce (21) is provided in the code (16), which, in combination with the other, non-manipulated code (16), when a hash function (25) is applied to the code (16), results in a hash value that has a predetermined target pattern,
wherein the target pattern represents a specification made independently of the other, non-manipulated code (16) with respect to a subset of the bit sequence of the hash value,
and, in order to start the execution of the code (16), a code-internal or code-external start function (30) applies the hash function (25) to the code (16) with the nonce (21) integrated therein in order to calculate a current hash value of the code (16) to be checked, wherein the current hash value results in an actual pattern (32) and the execution of the code (16) is controlled according to the actual pattern (32), wherein the code (16) is executed successfully only if the actual pattern (32) matches the target pattern.

2. The method according to claim 1, wherein the start function (30) selects an entry point (34) into the code (16) depending on the actual pattern (32) and begins or continues the execution (36) of the code (16) by jumping (35) to the entry point (34).

3. The method according to claim 2, wherein the start function (30) provides a jump table in which a plurality of possible jump addresses (33) are assigned to a respective table index, and the start function (30) selects a table index by means of the actual pattern (32) and defines the jump address (33) assigned to the selected table index as the entry point (34), wherein the target pattern specifies that table index to which the start address of a boot function of the application software is assigned.

4. The method according to claim 3, wherein the jump table contains, at at least one other table index that differs from the target pattern, a jump address (33) to an infinite loop and/or to a signalling function for signalling a code manipulation.

5. The method according to any one of the preceding claims, wherein the hash function (25) is a cryptographic hash function (25) that forms the hash value from a combination of the code (16) and a cryptographic key (26) of the processor circuit (14).

6. The method according to claim 5, wherein the cryptographic key (26) is received from a security module of the processor circuit (14) at the runtime of the start function (30).

7. The method according to any one of the preceding claims, wherein the hash value is determined by means of the hash function (25) using an HMAC method.

8. The method according to any one of the preceding claims, wherein the hash function (25) determines the hash value by means of a CMAC method that uses a symmetric block cipher algorithm.

9. The method according to any one of the preceding claims, wherein the start function (30) is executed as part of a parallel boot procedure (40), wherein the parallel boot procedure (40) comprises that the start function (30) is executed in a microprocessor or a microcontroller of the processor circuit (14), where the code (16) is also to be executed, and meanwhile, in a hardware security module, HSM, of the processor circuit (14), a further hash value of the code (16) is calculated and fully compared with a prescribed reference hash value (24) by means of a further hash function (25) and, if it is detected that the further hash value is different from the reference hash value (24), the HSM blocks the further execution of the code (16) by means of a blocking signal (29).

10. A processor circuit (14), in which a code (16) of an application software is stored for execution (36), wherein, in order to secure the code (16) against execution after a manipulation, the processor circuit (14) is adapted to carry out a method according to any one of the preceding claims.

11. A control unit (11) for a motor vehicle (10), wherein the control unit (11) comprises a processor circuit (14) according to claim 10.

12. A motor vehicle (10) having at least one control unit (11) according to claim 11.

## Revendications

1. Procédé pour sécuriser un circuit de processeur (14) contre une exécution d'un code manipulé (16) d'un logiciel d'application,
dans lequel un nonce (21) est fourni dans le code (16), lequel nonce, en combinaison avec le reste du code (16) non manipulé, donne, lors de l'application d'une fonction de hachage (25) au code (16), une valeur de hachage présentant un motif théorique prédéterminé,
dans lequel le motif théorique représente une spécification rendue indépendante du reste du code (16) non manipulé en ce qui concerne un sous-ensemble de la séquence de bits de la valeur de hachage,
et, pour démarrer l'exécution du code (16), une fonction de démarrage (30) interne au code ou externe au code applique la fonction de hachage (25) au code (16) avec le nonce (21) qui y est intégré, afin de calculer une valeur de hachage actuelle du code (16) à vérifier, dans lequel la valeur de hachage actuelle donne un motif réel (32), et l'exécution du code (16) est commandée en fonction du motif réel (32), dans lequel le code (16) n'est exécuté avec succès que lorsque le motif réel (32) correspond au motif théorique.

2. Procédé selon la revendication 1, dans lequel la fonction de démarrage (30), en fonction du motif réel (32), sélectionne une cible d'entrée (34) dans le code (16), et l'exécution (36) du code (16) commence ou se poursuit par un saut (35) vers la cible d'entrée (34).

3. Procédé selon la revendication 2, dans lequel la fonction de démarrage (30) prévoit une table de sauts dans laquelle plusieurs adresses de saut possibles (33) sont associées à un indice de tableau respectif, et la fonction de démarrage (30) sélectionne, au moyen du motif réel (32), un indice de tableau et définit l'adresse de saut (33) associée à l'indice de tableau sélectionné comme cible d'entrée (34), dans lequel le motif théorique indique l'indice de tableau auquel l'adresse de démarrage d'une fonction d'amorçage du logiciel d'application est associée.

4. Procédé selon la revendication 3, dans lequel la table de sauts contient, à au moins un indice de tableau restant différent du motif théorique, une adresse de saut (33) vers une boucle sans fin et/ou vers une fonction de signalisation destinée à signaler une manipulation de code.

5. Procédé selon l'une quelconque des revendications précédentes, dans lequel la fonction de hachage (25) est une fonction de hachage cryptographique (25) qui forme la valeur de hachage à partir d'une combinaison du code (16) et d'une clé cryptographique (26) du circuit de processeur (14).

6. Procédé selon la revendication 5, dans lequel la clé cryptographique (26) est reçue, lors de l'exécution de la fonction de démarrage (30), à partir d'un module de sécurité du circuit de processeur (14).

7. Procédé selon l'une quelconque des revendications précédentes, dans lequel la valeur de hachage est déterminée par la fonction de hachage (25) au moyen d'un procédé HMAC.

8. Procédé selon l'une quelconque des revendications précédentes, dans lequel la valeur de hachage est déterminée par la fonction de hachage (25) au moyen d'un procédé CMAC, lequel utilise un algorithme de chiffrement par blocs symétrique.

9. Procédé selon l'une quelconque des revendications précédentes, dans lequel la fonction de démarrage (30) est exécutée en tant que partie intégrante d'une procédure d'amorçage parallèle (40), dans lequel la procédure d'amorçage parallèle (40) comprend le fait que la fonction de démarrage (30) est exécutée dans un microprocesseur ou un microcontrôleur du circuit de processeur (14), où le code (16) doit également être exécuté, et que, pendant ce temps, dans un module de sécurité matériel, HSM, du circuit de processeur (14), une autre valeur de hachage du code (16) est calculée au moyen d'une autre fonction de hachage (25) et comparée intégralement à une valeur de hachage de référence (24) prédéfinie, et que, lorsqu'il est constaté que l'autre valeur de hachage est différente de la valeur de hachage de référence (24), le HSM bloque, au moyen d'un signal de blocage (29), une exécution ultérieure du code (16).

10. Circuit de processeur (14), dans lequel est stocké un code (16) d'un logiciel d'application destiné à être exécuté (36), dans lequel le circuit de processeur (14) est adapté, afin de sécuriser le code (16) contre une exécution après une manipulation, pour mettre en œuvre un procédé selon l'une quelconque des revendications précédentes.

11. Unité de commande (11) pour un véhicule à moteur (10), dans laquelle l'unité de commande (11) comprend un circuit de processeur (14) selon la revendication 10.

12. Véhicule à moteur (10) comprenant au moins une unité de commande (11) selon la revendication 11.
